# EUROPEAN PATENT SPECIFICATION

(11) **EP 1 887 059 B1**
(45) Date of publication and mention of the grant of the patent: **08.01.2014**
(21) Application number: 06729565.9
(22) Date of filing: 20.03.2006
(51) Int. Cl.: C09D 17/00, B05D 5/06, B05D 7/24, B32B 7/02, B32B 27/20, C01B 33/18, C09D 5/00, C09D 7/12, C09D 201/00, G02B 1/11

(54) **DISPERSION CONTAINING HOLLOW SiO2, COATING COMPOSITION, AND SUBSTRATE WITH ANTIREFLECTION COATING FILM**
DISPERSION MIT HOHLEM SiO2, BESCHICHTUNGSZUSAMMENSETZUNG SOWIE SUBSTRAT MIT ANTIREFLEKTIONSÜBERZUG
DISPERSION DE SiO2 CREUX, COMPOSITION D' ENDUCTION, ET SUBSTRAT AVEC FILM D' ENDUCTION ANTIREFLET

(30) Priority: 02.06.2005 JP 2005162487
(43) Date of publication of application: 13.02.2008
(73) Proprietor: Asahi Glass Company, Limited, Chiyoda-ku Tokyo 100-8405 (JP)
(72) Inventor: KAWAI, Yohei c/o Asahi Glass Company, Limited, 115, Yokohama-shi, Kanagawa;2218755 (JP); YONEDA, Takashige c/o Asahi Glass Company, Limited, Kanagawa;2218755 (JP)
(74) Representative: Müller-Boré & Partner Patentanwälte
(86) International application number: PCT/JP2006/305597
(87) International publication number: WO 2006/129411

(56) References cited:
- EP-A- 1 447 433
- JP-A- 2001 233 611
- JP-A- 2002 160 907
- JP-A- 2003 133 267
- KR-A- 20040 099 228
- US-A1- 2005 116 205
- DATABASE CA [Online] CHEMICAL ABSTRACTS SERVICE, COLUMBUS, OHIO, US; 17 October 2003 (2003-10-17), YAGUCHI, MITSUO ET AL: "Solar cell system" XP002501911 retrieved from STN Database accession no. 2003:815648 -& JP 2003 298087 A (MATSUSHITA ELECTRIC WORKS, LTD., JAPAN) 17 October 2003 (2003-10-17)
- DATABASE CA [Online] CHEMICAL ABSTRACTS SERVICE, COLUMBUS, OHIO, US; 17 June 2004 (2004-06-17), YAMAKI, TAKESHI ET AL: "Fluoropolymer multilayer films for solar cells with high power generation efficiency" XP002501912 retrieved from STN Database accession no. 2004:489647 -& JP 2004 168057 A (MATSUSHITA ELECTRIC WORKS, LTD., JAPAN; HIRAOKA AND CO., LTD.) 17 June 2004 (2004-06-17)
- DATABASE CA [Online] CHEMICAL ABSTRACTS SERVICE, COLUMBUS, OHIO, US; 20 May 2004 (2004-05-20), YAMAKI, TAKESHI ET AL: "Surface-antisoiling composite resin films, articles bonded therewith, and decorative sheets laminated therewith" XP002501913 retrieved from STN Database accession no. 2004:408355 -& JP 2004 142161 A (MATSUSHITA ELECTRIC WORKS, LTD., JAPAN) 20 May 2004 (2004-05-20)
- DATABASE CA [Online] CHEMICAL ABSTRACTS SERVICE, COLUMBUS, OHIO, US; 15 July 2003 (2003-07-15), SUSA, KENZO ET AL: "Production of hollow particulate aggregates and products thereof" XP002501934 retrieved from STN Database accession no. 2003:540810 -& JP 2003 200033 A (HITACHI CHEMICAL CO., LTD., JAPAN) 15 July 2003 (2003-07-15)
- 'DIN ISO 13321' October 2004, XP009129330
- 'ASTM E2490 - 08' 2008, ASTM INTERNATIONAL, USA,
- P. BOWEN: "Particle Size Distribution Measurement from Millimeters to Nanometers and from Rods to Platelets", JOURNAL OF DISPERSION SCIENCE AND TECHNOLOGY, vol. 23, no. 5, 2002, pages 631-662, XP009102859, UK

## Description

### TECHNICAL FIELD

The present invention relates to a dispersion containing hollow SiO₂ to obtain an antireflection film having high antireflection properties and low chroma saturation, a coating composition containing it and a substrate with an antireflection coating film obtained by applying the coating composition.

### BACKGROUND ART

Along with high definition of display technology such as liquid crystal, plasma and organic EL in recent years, for a FPD (flat panel display) to be used for monitors, large TV, personal computers etc., a material of an antireflection film having high antireflection properties and low chroma saturation has been strongly desired.

Heretofore, as an antireflection material, low refractive index hollow fine SiO₂ particles have been used, which have been considered as a useful material with low chroma saturation since antireflection properties are obtained in the form of a single layer film (e.g. Patent Document 1). However, conventional hollow fine SiO₂ particles have a small particle size and are spherical and when blended into a coating composition, the fine silica particles are present as uniformly dispersed in the obtained coating film. Therefore, it has been difficult to have the coating film have a refractive index gradient and have low chroma saturation.

Further, when the particle size of hollow fine SiO₂ particles obtained by a conventional method is enlarged to impart a refractive index gradient thereby to lower the chroma saturation, the thickness of the shell of the hollow fine SiO₂ particles tends to increase, thus decreasing transparency. On the other hand, if the shell is made thin, since the pores are large, the strength of the coating film tends to be insufficient.
Patent Document 1: JP-A-2001-233611

### DISCLOSURE OF THE INVENTION

### OBJECT TO BE ACCOMPLISHED BY THE INVENTION

The object of the present invention is to provide a dispersion containing hollow SiO₂ which is capable of, when formed into a coating composition, providing an antireflection film having high antireflection properties and having low chroma saturation, by formation of a low refractive index coating film with a refractive index gradient, and a coating composition containing such a dispersion.

### MEANS TO ACCOMPLISH THE OBJECT

According to the present invention, the following dispersion containing hollow SiO₂, coating composition containing the dispersion, and transparent substrate with an antireflection coating film obtained by applying the coating composition, are provided.
(1) A dispersion as specified in claim 1 containing hollow SiO₂, having agglomerated particles (hereinafter sometimes referred to as "hollow SiO₂ agglomerated particles") which are agglomerates of primary fine particles of hollow SiO₂ (hereinafter sometimes referred to as "hollow SiO₂ primary particles") dispersed in a dispersion medium, wherein the average agglomerated particle size of the agglomerated particles is within a range of from 60 to 400 nm, and the average agglomerated particle size is at least 1.5 times the average primary particle size of SiO₂.
(2) The dispersion containing hollow SiO₂ according to the above (1), wherein the average primary particle size of the primary fine particles of hollow SiO₂ is within a range of from 5 to 50 nm.
(3) The dispersion containing hollow SiO₂ according to the above (1) or (2), wherein the agglomerated particles are non-spherical agglomerated particles having from 2 to 10 primary fine particles of hollow SiO₂ agglomerated.
(4) A coating composition containing the dispersion containing hollow SiO₂ as defined in any one of the above (1) to (3).
(5) The coating composition according to the above (4), which has a solution of a matrix component mixed therewith in such an amount that the mass of the solid content of the matrix component is from 0.1 to 10 times the total mass of the solid content of the hollow SiO₂.
(6) The coating composition according to the above (6), wherein the metal oxide is one member or a mixture of at least two selected from the group consisting of Al₂O₃, SiO₂, SnO₂, TiO₂ and ZrO₂.
(7) The coating composition according to the above (6), wherein the organic resin is a ultraviolet-curable organic resin.

### EFFECTS OF THE INVENTION

The hollow SiO₂ agglomerated particles in the dispersion containing hollow SiO₂ of the present invention comprises hollow SiO₂ primary particles agglomerated, the respective pores (cavities) partitioned. Accordingly, when they are blended in a coating film, the thickness of the obtained coating film is high even with a relatively thin shell. Further, since the hollow SiO₂ agglomerated particles of the present invention have a relatively large average agglomerated particle size, when they are mixed with a matrix component to form a coating film, a coating film such that the proportion of the matrix component is high near the substrate is obtained. By the coating film having a refractive index gradient, a film having low chroma saturation and high antireflection properties can be obtained.

The antireflection film to be obtained by the present invention has high transparency and high film strength.

### BEST MODE FOR CARRYING OUT THE INVENTION

Now, the present invention will be described in detail.

The present invention resides in a dispersion containing hollow SiO₂ having hollow SiO₂ agglomerated particles dispersed in a dispersion medium.

The hollow SiO₂ agglomerated particles of the present invention comprises hollow SiO₂ primary particles each having a complete air gap in the interior of the SiO₂ shell agglomerated, and are considered as low refractive index particles having a relatively large average agglomerated particle size. The hollow SiO₂ agglomerated particles are agglomerates of hollow SiO₂ primary particles. Accordingly, the pores are partitioned, and even with a relatively thin shell, when the particles are blended in a coating film as a filler, the strength of the obtained coating film can be made high. Further, since the agglomerated particles have a relatively large average agglomerated particle size, when they are mixed with a matrix component (binder) to obtain a coating composition, which is applied to a substrate, a coating film can be formed such that the matrix component is present in a large amount near the substrate, and the proportion of the hollow SiO₂ agglomerated particles is high on the air side. By the coating film having a refractive index gradient, an antireflection film having low chroma saturation can be obtained.

Whereas, conventional hollow fine SiO₂ particles have a small particle size and are spherical, and are present as uniformly dispersed in a coating film in which they are blended, whereby it is difficult to further lower the chroma saturation by making the coating film have a refractive index gradient in the thickness direction. Further, when it is attempted to enlarge the particle size to bring about a refractive index gradient thereby to lower the chroma saturation, the thickness of the shell of the hollow fine SiO₂ particles tends to increase, thus impairing transparency, or if it is attempted to thicken the shell, the strength of the coating film tends to be insufficient due to pores being large. The present invention provides a sharp contrast to such conventional problems.

With respect to the antireflection properties, the refractive index of the hollow SiO₂ primary particles constituting the agglomerated particles in the antireflection film is greatly influential, and the refractive index of the hollow SiO₂ primary particles is determined by the size of the cavity and the thickness of the SiO₂ shell. Accordingly, the hollow SiO₂ agglomerated particles of the present invention are useful particularly as an antireflection material, and provides a coating film having high antireflection properties by being dispersed in a solvent and applied to a substrate.

The hollow SiO₂ agglomerated particles of the present invention have a complete air gap in the interior of the SiO₂ shell as mentioned above, have a high porosity and have a low refractive index and a low dielectric constant, and accordingly they can be favorably used, not only as an antireflection material, but also for optical filters, heat insulating materials, low dielectric constant materials, drug delivery, etc.

### (Production of hollow SiO₂ agglomerated particles)

The hollow SiO₂ agglomerated particles of the present invention are usually produced preferably by removing the core of core/shell fine particles wherein the shell is SiO₂.

### (Type, shape, particle size and the like of core particles)

The core particles are preferably ones which are dissolved (or decomposed or sublimated) by heat, an acid or light. For example, one member or a mixture of at least two selected from the group consisting of heat decomposable organic polymer fine particles of e.g. surfactant micelles, a water soluble organic polymer, a styrene resin or an acrylic resin; acid-soluble inorganic fine particles of e.g. sodium aluminate, calcium carbonate, basic zinc carbonate or zinc oxide; a metal chalcogenide semiconductor such as zinc sulfide or cadmium sulfide; and photo-soluble inorganic fine particles of e.g. zinc oxide may be used.

Further, the shape of the core particles is not particularly limited, and for example, one member or a mixture of at least two selected from the group consisting of spheres, fusiform particles, rods, irregular particles, cylinders, needles, flat particles, scales, leaves, tubes and seats may be used.

Further, if the core particles are monodispersed particles, hollow SiO₂ agglomerated particles are hardly obtained, such being undesirable, and it is preferred to use agglomerates having 2 to 10 core fine particles agglomerated.

The average agglomerated particle size of the core particles influences the size of the obtained hollow SiO₂ agglomerated particles and is from 50 to 350 nm. If it is less than 50 nm, an antireflection film having low chroma saturation is hardly obtained from the obtained hollow SiO₂ agglomerated particles, and if it exceeds 350 nm, the transparency of a coating film having the hollow SiO₂ agglomerated particles blended may be insufficient.

The average primary particle size of the core particles is preferably within a range of from 5 to 200 nm with a view to maintaining optimum size of the cavity of the obtained hollow SiO₂ agglomerated particles and dissolution rate when the cores are dissolved. If the average primary particle size is less than 5 nm, the cavity of the hollow SiO₂ agglomerated particles tends to be small, whereby when the particles are blended in a coating film, the antireflection properties may be insufficient, and if it exceeds 200 nm, the core dissolution rate tends to be insufficient, whereby complete hollow particles will hardly be obtained.

In order to disperse the core fine particles in a dispersion medium, various methods may be employed. For example, a method of preparing the core fine particles in a solvent, or a method of adding a dispersion medium and a dispersing agent as described hereinafter to a core particulate powder, followed by peptization by a dispersing machine such as a ball mill, a bead mill, a sand mill, a homomixer or a paint shaker. A solid content concentration of the dispersion of core fine particles thus obtained is preferably at most 50 mass%. If the solid content concentration exceeds 50 mass%, stability of the dispersion tends to decrease.

### (SiO₂ precursor)

In order to obtain hollow SiO₂ agglomerated particles, first, core/shell fine particles and/or agglomerates (clusters) of core/shell fine particles wherein the shell is SiO₂ are produced.

As described above, it is preferred to use agglomerated core fine particles, whereby agglomerated particles of corresponding core/shell fine particles can be obtained.

Specifically, by reacting core fine particles (or a material of the core fine particles) with a precursor of SiO₂, or by decomposing the precursor of SiO₂ in the presence of the core fine particles, the shell of SiO₂ is precipitated and formed in the surface of the core fine particles. The method of producing the core/shell fine particles may be a vapor phase method or a liquid phase method.

In a method by the vapor phase method, the core/shell fine particles can be produced by irradiating the material of the core fine particles and the SiO₂ material such as metal Si with plasma.

On the other hand, by a method by the liquid phase method, in the presence of core fine particles, a hydrolysis catalyst such as an acid or an alkali is added, whereby the SiO₂ precursor is hydrolyzed and precipitated around (on the outer surface of) the core fine particles. The SiO₂ precursor is likely to be three-dimensionally polymerized under alkaline conditions to form the shell. That is, the higher the pH, the higher the hydrolysis/polycondensation reaction rate of the silicon compound such as the SiO₂ precursor, whereby the SiO₂ shell can be formed in a short time. Accordingly, the pH of the solution is at least 7, more preferably at least 8, most preferably within a range of from 9 to 11. If the pH exceeds 11, the hydrolysis rate is too high, whereby SiO₂ itself to be formed is agglomerated, whereby formation of a homogeneous shell on the outer surface of the ZnO fine particles tends to be difficult. Further, the core/shell fine particles having the SiO₂ shell thus formed may be aged by heating to further densify the shell.

The SiO₂ precursor is one member or a mixture of at least two selected from the group consisting of silicic acid, a silicate and an alkoxysilane, and a hydrolysate or a polymer thereof may also be used.

Specifically, the silicic acid may be silicic acid obtained by e.g. a method of decomposing an alkali metal silicate with an acid, followed by dialysis, a method of peptizing an alkali metal silicate or a method of bringing an alkali metal silicate into contact with an acid-form cation exchange resin. The silicate may be an alkali silicate such as sodium silicate or potassium silicate, a quaternary ammonium salt such as ammonium silicate or tetraethylammonium salt, or a silicate of an amine such as ethanolamine.

Further, the alkoxysilane may be ethyl silicate, an alkoxysilane containing a fluorinated functional group such as a perfluoropolyether group and/or a perfluoroalkyl group, or an alkoxysilane containing one or more functional groups selected from the group consisting of a vinyl group and an epoxy group. The alkoxysilane containing a perfluoropolyether group may, for example, be perfluoropolyether triethoxysilane; the alkoxysilane containing a perfluoroalkyl group may, for example, be perfluoroethyl triethoxysilane; the alkoxysilane containing a vinyl group may, for example, be vinyl trimethoxysilane or vinyl triethoxysilane; and the alkoxysilane containing an epoxy group may, for example, be an alkoxysilane such as 2-(3,4-epoxycyclohexyl)ethyl trimethoxysilane, 3-glycidoxypropyl trimethoxysilane, 3-glycidoxypropyl methyldiethoxysilane or 3-glycidoxypropyl triethoxysilane.

In a case where acid-soluble inorganic fine particles of e.g. zinc acid are used as the core, if the pH when the SiO₂ precursor is mixed is at most 8, ZnO or the like will be dissolved, and accordingly the pH is preferably higher than 8.

### (Dispersion medium, solid content concentration and the like)

The dispersion medium in which e.g. the ZnO particles as the core are dispersed and in which the decomposition of the SiO₂ precursor is carried out in production of the dispersion of core/shell fine particles, is not particularly limited. It may, for example, be preferably water; an alcohol such as methanol, ethanol, n-propanol, isopropanol, n-butanol, isobutanol, sec-butanol, t-butanol, ethylene glycol, polyethylene glycol, propylene glycol, trimethylene glycol, 1,4-butanediol, cyclopentanol, cyclopentanediol or cyclohexanol; a ketone such as acetone, methyl ethyl ketone, diethyl ketone, methyl isobutyl ketone, methyl propyl ketone, isopropyl methyl ketone, isobutyl methyl ketone, cyclopentanone, cyclohexanone or acetophenone; an ether such as glyme, diglyme, isopropyl ether, isobutyl ether, methyl isopropyl ether, anisole, tetrahydrofuran or dioxane; an ester such as methyl acetate, ethyl acetate, ethyl acetoacetate, butyl acetate, methyl propionate, ethyl propionate, methyl butyrate or ethyl butyrate; a glycol ether such as ethylene glycol monomethyl ether or ethylene glycol monoethyl ether; a nitrogen-containing compound such as N,N-dimethylacetamide, N-methylacetamide, N,N-dimethylformamide, N-methylformamide, 2-pyrrolidinone, N-methyl-2-pyrrolidinone or 1,3-dimethyl-2-imidazolidinone; or a sulfur-containing compound such as dimethyl sulfoxide or sulfolane.

However, presence of water is essential in step of hydrolysis/polycondensation/shell formation of the SiO₂ precursor, and accordingly, it is necessary that water in an amount of from 5 to 100 mass% is contained in the entire solvent. If the water content is less than 5 mass%, the reaction will not sufficiently proceed. It is necessary that water at least in a stoichiometric amount or more is present in the system based on the amount of Si in the SiO₂ precursor in the dispersion medium.

Further, in production of the dispersion of core/shell fine particles, the solid content concentration is preferably within a range of at most 30 mass% and at least 0.1 mass%, more preferably within a range of at most 20 mass% and at least 1 mass%. If it exceeds 30 mass%, stability of the dispersion of fine particles tends to decrease, and if it is less than 0.1 mass%, productivity of the hollow SiO₂ agglomerated particles to be obtained tends to be very low.

In order that the shell is easily formed from the SiO₂ precursor by increasing the ionic strength when the dispersion of core/shell fine particles is produced, it is possible to add an electrolyte such as sodium chloride, potassium chloride, calcium chloride, magnesium chloride, sodium nitrate, potassium nitrate, lithium nitrate, calcium nitrate, magnesium nitrate, ammonium nitrate, sodium sulfate, potassium sulfate, ammonium sulfate, ammonium, sodium hydroxide, potassium hydroxide or magnesium hydroxide, to adjust the pH by using such an electrolyte.

### (Dissolution of core fine particles)

Then, the core fine particles of the core/shell fine particles are dissolved or decomposed to obtained hollow SiO₂ particles.

In order to dissolve or decompose the core fine particles of the core/shell fine particles, as described above, various means may be employed. For example, one or more methods selected from the group consisting of decomposition by heat, decomposition by an acid and decomposition by light may be mentioned.

In a case where the core fine particles are made of a heat decomposable organic resin, the core fine particles can be removed by heating in a vapor phase or a liquid phase. The heating temperature is preferably within a range of from 200 to 1,000°C. If it is less than 200°C, the core fine particles may remain, and if it exceeds 1,000°C, SiO₂ may be melted.

In a case where the core fine particles are made of an acid-soluble inorganic compound, the core fine particles can be removed by adding an acid or an acidic cation exchange resin in a vapor phase or a liquid phase. The acid is not particularly limited and may be either an inorganic acid or an organic acid. The inorganic acid may, for example, be hydrochloric acid, sulfonic acid, nitric acid, carbonic acid, phosphoric acid, phosphorous acid, hypophosphorous acid or nitrous acid, and the organic acid may, for example, be formic acid, acetic acid, propionic acid, butyric acid, valeic acid, caproic acid, oxalic acid, malonic acid, succinic acid, glutaric acid, malic acid, tartaric acid, citric acid, lactic acid, gluconic acid, maleic acid, fumaric acid or succinic acid.

Further, it is also preferred to use an acidic cation exchange resin instead of a liquid acid or an acid solution.

The acidic cation exchange resin may be a polyacrylic resin or a polymethacrylic resin having a carboxylic acid group, more preferably a polystyrene type having a sulfonic acid group which is more highly acidic.

In a case where the core fine particles are made of a photo-soluble inorganic compound, the core fine particles can be removed also by applying light in a vapor phase or a liquid phase. The light is preferably ultraviolet rays having a wavelength of at most 380 nm having a higher energy.

In the above method, whether or not the core fine particles are removed can be confirmed by observation by a transmission electron microscope and by elemental analysis of the obtained fine particles.

### (Properties of hollow SiO₂ agglomerated particles)

The hollow SiO₂ agglomerated particles (clusters) of the present invention obtained as mentioned above are agglomerated particles comprising a plurality or a large number of hollow SiO₂ primary fine particles agglomerated, which are dispersed in a dispersion medium. The average particle size of the agglomerated particles is at least 1.5 times, preferably at least 3 times, more preferably at least 10 times the average primary particle size, and it is preferably at most 30 times.

The average primary particle size of the hollow SiO₂ primary fine particles in the present invention is preferably within a range of from 5 to 50 nm.

Further, the agglomerated particles are preferably non-spherical agglomerated particles having from 2 to 10 hollow SiO₂ primary fine particles agglomerated.

The shape of the particles is not particularly limited, and one member or a mixture of at least two selected from the group consisting of spheres, rods, fusiform particles, columns, tubes and sheets may be used.

The average agglomerated particle size of the hollow SiO₂ agglomerated particles in the dispersion is within a range of from 60 to 400 nm, preferably from 60 to 200 nm. If it is less than 60 nm, an antireflection film having low chroma saturation will hardly be obtained, and if it exceeds 400 nm, transparency of the coating film tends to be insufficient.

The thickness of the shell of the hollow SiO₂ primary particles is preferably within a range of from 1 to 20 nm, and from one-fifth to one-third of the average primary particle size. If the thickness of the shell is less than 1 nm and is less than one-fifth of the average primary particle size, the hollow shape cannot be kept when the ZnO fine particles are dissolved, and if it exceeds 20 nm and exceeds one third of the average primary particle size, the transparency of the coating film containing the hollow SiO₂ agglomerated particles tends to be insufficient.

The concentration of the solid content dispersed in the dispersion of particles containing hollow SiO₂ of the present invention is at most 50 mass% and at least 0.1 mass%, preferably from 30 to 0.5 mass%, more preferably from 20 to 1 mass%. Particularly if it exceeds 50 mass%, stability of the dispersion tends to decrease, such being undesirable.

For the dispersion medium of the dispersion containing hollow SiO₂, as described above, water or an organic solvent such as an alcohol, a ketone, an ester, an ether, a glycol ether, a nitrogen-containing compound or a sulfur-containing compound may be used.

### (Coating composition)

The dispersion containing hollow SiO₂ having hollow SiO₂ dispersed in a dispersion medium of the present invention obtained as mentioned above can be used as it is or by adding a matrix component or a conventional compounding agent for formation of a coating composition, to form a coating composition.

That is, the dispersion containing hollow SiO₂ can be used as it is or by adding various compounding agents to obtain a coating composition, which is applied to a substrate thereby to obtain a substrate with an antireflection coating film.

The coating composition of the present invention can improve hardness of a coating film by mixing the dispersion containing hollow SiO₂ with a matrix component (binder). The amount of the solid content of the matrix component is preferably within a range of from 0.1 to 10 times the amount of all solid content of the hollow SiO₂ agglomerated particles. If it is less than 0.1 time, the hardness of the coating film may be insufficient, and if it exceeds 10 times, antireflection properties of the substrate with a coating film may be insufficient.

The matrix component is preferably one curable by heat or ultraviolet rays, and it may, for example, be a precursor of a metal oxide and/or an organic resin.

The metal oxide may be one member or a mixture of at least two selected from the group consisting of Al₂O₃, SiO₂, SnO₂, TiO₂ and ZrO₂, its precursor may, for example, be a metal alkoxide of the metal and/or its hydrolysis/polycondensation product. Further, the organic resin may be preferably an ultraviolet-curable organic resin. Specifically, it may, for example, be one member or a mixture of at least two selected from the group consisting of an acrylic resin, a urethane acrylate resin, an epoxy acrylate resin, a polyester acrylate, a polyether acrylate, an epoxy resin and a silicone resin.

Further, the metal alkoxide as the matrix component is preferably an alkoxysilane. It may, for example, be ethyl silicate, or an alkoxysilane containing a fluorinated functional group such as a perfluoropolyether group and/or a perfluoroalkyl group, or an alkoxysilane containing one or more of functional groups selected from the group consisting of a vinyl group and an epoxy group. The alkoxysilane containing a perfluoropolyether group may, for example, be perfluoropolyether triethoxysilane; the alkoxysilane containing a perfluoroalkyl group may be perfluoroethyl triethoxysilane; the alkoxysilane containing a vinyl group may be vinyl trimethoxysilane or vinyl triethoxysilane; the alkoxysilane containing an epoxy group may be 2-(3,4-epoxycyclohexyl)ethyl trimethoxysilane, 3-glycidoxypropyl trimethoxysilane, 3-glycidoxypropyl methyl diethoxysilane or 3-glycidoxypropyl triethoxysilane.

### (Surfactant and the like)

The coating composition of the present invention may contain a surfactant to improve wettability to a substrate, and any of an anionic surfactant, a cationic surfactant and a nonionic surfactant may be used. The surfactant is preferably a nonionic surfactant having a structural unit of -CH₂CH₂O-, -SO₂-, -NR- (wherein R is a hydrogen atom or an organic group), -NH₂, -SO₃Y or -COOY (wherein Y is a hydrogen atom, a sodium atom, a potassium atom or an ammonium ion). Among them, particularly preferred is a nonionic surfactant having a structural unit of -CH₂CH₂O-, whereby the storage stability of the coating composition will not be impaired.

The nonionic surfactant may, for example, be an alkyl polyoxyethylene ether, an alkyl polyoxyethylene/polypropylene ether, a fatty acid polyoxyethylene ester, a fatty acid polyoxyethylene sorbitan ester, a fatty acid polyoxyethylene sorbitol ester, an alkylpolyoxyethyleneamine, an alkylpolyoxyethyleneamide or a polyether-modified silicone surfactant.

### (Solid content concentration and the like)

As a solvent of the coating composition of the present invention, water or an organic solvent such as an alcohol, a ketone, an ester, an ether, a glycol ether, a nitrogen-containing compound or a sulfur-containing compound may be used, which is the dispersion medium of the dispersion containing hollow SiO₂.

The solid content concentration of the coating composition of the present invention is preferably within a range of from 0.1 to 50 mass%. If it is less than 0.1 mass%, it tends to be difficult to form a coating film with a sufficient thickness to obtain antireflection properties, and if it exceeds 50 mass%, stability of the coating composition tends to decrease.

In the coating composition of the present invention, various compounding agents for a coating composition comprising an inorganic compound and/or an organic compound may be blended to impart one or more functions selected from the group consisting of hard coating, coloring, electrical conductivity, antistatic properties, polarization, ultraviolet shielding properties, infrared shielding properties, antifouling properties, anti-fogging properties, photocatalytic activity, antibacterial properties, photoluminescence properties, battery properties, control of refractive index, water repellency, oil repellency, removal of fingerprint and lubricity.

Further, to the coating composition of the present invention, depending upon the function required for the coating film, commonly used additives such as an antifoaming agent, a leveling agent, an ultraviolet absorber, a viscosity modifier, an antioxidant and a fungicide may properly be added. Further, to make the coating film have a desired color, various pigments which are commonly used for a coating composition such as titania, zirconia, white lead and red oxide may be blended.

### (Formation of coating film)

In the present invention, the coating composition containing the dispersion containing hollow SiO₂ is applied and dried on a substrate to form an antireflection coating film i.e. a low refractive index coating film.

The thickness of the antireflection coating film of the present invention is preferably within a range of from 10 to 3,000 nm. If it is less than 10 nm, antireflection properties may be insufficient, and if it exceeds 3,000 nm, cracking is likely to occur, interference fringes may form, or scars tend to outstand.

The reflectance of the coating film can be measured by a spectrophotometer.

The antireflection coating film of the present invention preferably has, in a visible region at a wavelength of from 380 to 780 nm, a minimum reflectance of at most 2% and a difference between the maximum and minimum reflectances of at most 1%. If the minimum reflectance exceeds 2%, function as a low refractive index coating film may be insufficient. Further, if the difference between maximum and minimum reflectances exceeds 1%, the chroma saturation tends to be too high.

Further, it is preferred to adjust the thickness of the antireflection coating film to be obtained by the present invention so that the reflectance at a wavelength of 550 nm becomes minimum. The thickness can be adjusted in accordance with the thickness = λ/4n (wherein λ is the wavelength of light and n is the refractive index of the film).

The transparency of the coating film is preferably evaluated by the haze in accordance with JIS K-7150 standard. The haze of the coating film is preferably at most 1%, particularly preferably at most 0.5%. If the haze exceeds 1%, the transmittance tends to be low, thus leading to poor transparency.

On the surface of the coating film of the present invention, a coating film having a specific function comprising an inorganic compound and/or an organic compound may be further formed to impart one or more functions selected from the group consisting of hard coating, coloring, electrical conductivity, antistatic properties, polarization, ultraviolet shielding properties, infrared shielding properties, antifouling properties, anti-fogging properties, photocatalytic activity, antifungal properties, photoluminescence properties, battery properties, control of refractive index, water repellency, oil repellency, removal of fingerprint and lubricity.

### (Substrate)

The substrate to which the coating composition of the present invention is applied may be optional one depending upon the purpose of use and is not particularly limited. Particularly when an antireflection coating film is to be formed, the substrate may be either transparent or opaque but is preferably a transparent substrate, and it may, for example, be glass or an organic resin substrate. The shape of the substrate may be a plate-shape or a film-shape, and the shape of the substrate is not limited to a flat plate, and the substrate may have a curvature on the entire or a part of the surface.

The organic resin forming the substrate may be preferably one member or a mixture of at least two selected from the group consisting of a polyethylene terephthalate, a polycarbonate, a polymethyl methacrylate (PMMA) and triacetyl cellulose.

On such a substrate, a coating film comprising an inorganic compound and/or an organic compound may be preliminarily formed to impart one or more functions selected from the group consisting of hard coating, coloring, electrical conductivity, antistatic properties, polarization, ultraviolet shielding properties, infrared shielding properties, antifouling properties, anti-fogging properties, photocatalytic activity, antifungal properties, photoluminescence properties, battery properties, and control of refractive index. Further, on a coating film containing hollow SiO₂ agglomerated particles obtained by applying the coating composition of the present invention, a functional coating film comprising an inorganic compound and/or an organic compound may be formed to impart one or more functions selected from the group consisting of hard coating, coloring, electrical conductivity, antistatic properties, polarization, ultraviolet shielding properties, infrared shielding properties, antifouling properties, anti-fogging properties, photocatalytic activity, antibacterial properties, photoluminescence properties, battery properties, control of refractive index, water repellency, oil repellency, removal of fingerprint, and lubricity.

### (Coating method)

The coating composition of the present invention may be applied by a known method. For example, brush coating, roller coating, hand coating, brush coating, dipping, spin coating, dip coating, coating by various printing methods, curtain flow, bar coating, die coating, gravure coating, microgravure coating, reverse coating, roll coating, flow coating, spray coating or dip coating may be mentioned.

Further, for the purpose of increasing the mechanical strength of the coating film, heating or irradiation with ultraviolet rays, electron rays or the like may be carried out as the case requires. The heating temperature may be determined considering heat resistance of the substrate but is preferably from 60 to 700°C.

When the coating composition of the present invention is applied, no particular pre-treatment on the organic resin substrate is required, but for the purpose of further increasing adhesion of the coating film, a discharge treatment such as plasma treatment, corona treatment, UV treatment or ozone treatment, a chemical treatment with e.g. water, an acid or an alkali, or a physical treatment using an abrasive may be applied.

### EXAMPLES

Now, the present invention will be described in further detail with reference to Examples of the present invention (Examples 1 to 3) and a Comparative Example (Example 4). However, the present invention is by no means restricted to such specific Examples. EXAMPLE 1: A case where particles = hollow SiO₂ agglomerated particles, matrix = SiO₂ and substrate = glass
(1) To a glass reactor having a capacity of 200 ml, 60 g of ethanol, 30 g of a fine ZnO particles cluster aqueous dispersion (manufactured by Sakai Chemical Industry Co., Ltd., tradename: NANOFINE-50, average primary particle size: 20 nm, average agglomerated particle size: 100 nm, solid content concentration: 10 mass%) and 10 g of tetraethoxysilane (solid content concentration as calculated as SiO₂: 29 mass%) were added, and then an aqueous ammonia solution was added to adjust pH=10, followed by stirring at 20°C for 6 hours to obtain 100 g of a dispersion of core/shell fine particles (solid content concentration: 6 mass%).
(2) 100 g of a strongly acidic cation exchange resin (manufactured by Mitsubishi Chemical Corporation, tradename: DIAION, total exchange capacity: at least 2.0 (meq/ml)) was added to the obtained dispersion of core/shell fine particles, followed by stirring for one hour, and after the pH became 4, the strongly acidic cation exchange resin was removed by filtration to obtain 100 g of a dispersion containing hollow SiO₂. The thickness of the shell of the hollow SiO₂ primary particles was 10 nm, and the pore size was 20 nm. Further, the hollow fine SiO₂ particles were agglomerated particles, the average agglomerated particle size was 100 nm, and the solid content concentration was 3 mass%.
(3) To a glass reactor having a capacity of 200 ml, 23 g of the obtained dispersion containing hollow SiO₂ agglomerated particles, 65 g of ethanol, 10 g of a silicic acid oligomer solution (solid content concentration: 3 mass%, ethanol solvent) obtained by hydrolyzing tetraethoxysilane with nitric acid, as a matrix component, and 2 g of a surfactant solution (manufactured by Nippon Unicar Company Limited, tradename: L-77, solid content concentration: 1 mass%, ethanol solvent) were weighed, followed by stirring for 10 minutes to obtain an antireflection coating composition.
(4) The obtained hollow SiO₂ agglomerated particles and antireflection coating composition were subjected to evaluation tests as follows.
   (A) Hollow SiO₂ agglomerated particles
      The following evaluations were conducted with respect to the hollow SiO₂ agglomerated particles. The evaluation results are shown in Table 1.
      (i) The average primary particle size, the shape and the core remaining of the hollow SiO₂ primary particles were observed by a transmission electron microscope (manufactured by Hitachi, Ltd., model: H-9000).
      (ii) The average agglomerated particle size of the hollow SiO₂ agglomerated particles was measured by a dynamic light scattering particle size analyzer (manufactured by NIKKISO, CO., LTD., model: Microtrac UPA).
   (B) The coating composition was evaluated with respect to a coating film obtained by applying it.
      The coating composition was applied to a substrate wiped with ethanol (100 mm × 100 mm, thickness: 3.5 mm) (the refractive index of the substrate: 1.52 in the case of a glass substrate or 1.58 in the case of a PMMA substrate), followed by spin coating at a number of revolutions of 200 rpm for 60 seconds to uniformalize the composition. Then, the composition was dried at 200°C for 10 minutes to form a coating film with a thickness of 100 nm as a measurement sample. The sample having a coating film formed thereon was subjected to the following evaluations. The results are shown in Table 2.
      (i) To evaluate the reflectance, the reflectance of the obtained coating film was measured by a spectrophotometer (manufactured by Hitachi, Ltd., model: U-4100).
      (ii) To evaluate the outer appearance, the coating unevenness of the obtained coating film was visually evaluated on the basis of the evaluation standards ○: favorable outer appearance without coating unevenness and ×: impractical with coating unevenness.
      (iii) To evaluate transparency, evaluation was conducted by the haze. The haze was measured in accordance with JIS K-7105. The haze of the coating film on the substrate was measured by a haze computer (manufactured by SUGA TEST INSTRUMENTS Co., Ltd., model: HGM-3DP).
      (iv) To evaluate abrasion resistance, the surface of the coating film of the sample was abraded by a Taber abrader for 100 reciprocations, and the coating film peeling state was visually observed on the basis of evaluation standards ○: no coating film peeled at all, Δ: a part of the coating film peeled, but a half or larger area remained, and ×: more than half peeled. EXAMPLE 2: Particles = hollow SiO₂ agglomerated particles, matrix = TiO₂, substrate = glass
         (1) 100 g of a dispersion of hollow SiO₂ agglomerated particles (average agglomerated particle size: 100 nm, solid content concentration: 3 mass%) was obtained in the same manner as in Example 1. Further, the thickness of the shell of the hollow SiO₂ primary particles was 10 nm and the pore size was 20 nm. The particle measurement results of the dispersion containing hollow SiO₂ are shown in Table 1.
         (2) To a glass reactor having a capacity of 200 ml, 23 g of the obtained dispersion containing hollow SiO₂ agglomerated particles, 65 g of ethanol, 10 g of a titanic acid oligomer solution (solid content concentration of 3 mass%, ethanol solvent) obtained by hydrolyzing titanium isopropoxide with nitric acid and 2 g of a surfactant solution (manufactured by Nippon Unicar Company Limited, tradename: L-77, solid content concentration: 1 mass%, ethanol solvent) were added, followed by stirring for 10 minutes to obtain an antireflection coating composition.

Using the coating composition, in the same manner as in Example 1, a coating film was formed on a substrate and evaluated. The results are shown in Table 2. EXAMPLE 3: Particles = hollow SiO₂ agglomerated particles, matrix = PMMA, substrate = glass
(1) 100 g of a dispersion containing hollow SiO₂ agglomerated particles (average agglomerated particle size: 100 nm, solid content concentration: 3 mass%) was obtained in the same manner as in Example 1. Further, the thickness of the shell of the hollow SiO₂ primary particles was 10 nm and the pore size was 20 nm. The measurement results of the dispersion containing hollow SiO₂ are shown in Table 1.
(2) To a glass reactor having a capacity of 200 ml, 23 g of the obtained dispersion of hollow SiO₂ agglomerated particles, 65 g of ethanol, 10 g of a methyl methacrylate monomer solution (solid content concentration: 3%, photo initiator: 0.1%, butyl acetate and isopropyl alcohol solvent) as a matrix resin, and 2 g of a surfactant solution (manufactured by Nippon Unicar Company Limited, tradename: L-77, solid content concentration: 1 mass%, ethanol solvent) were added, followed by stirring for 10 minutes to obtain an antireflection coating composition.

Using the coating composition, in the same manner as in Example 1, a coating film was formed on a substrate, and the coating film was cured by irradiation with ultraviolet rays for 10 minutes. The coating film was evaluated in the same manner as in Example 1. The results are shown in Table 2.

### EXAMPLE 4: Core = sodium aluminate and sodium silicate, matrix = SiO₂, substrate = glass

(1) To a glass reactor having a capacity of 200 ml, 1 g of a dispersion of fine SiO₂ particles (manufactured by Catalysts & Chemicals Industries Co., Ltd., tradename: SI-550, average particle size: 5 nm, SiO₂ concentration: 20 mass%, water solvent) and 19 g of water were added, mixed and heated at 80°C.
   To the dispersion of fine particles (pH=10.5), 90 g of an aqueous sodium silicate solution (SiO₂ solid content concentration: 1.2 mass%) and 90 g of an aqueous sodium aluminate solution (Al₂O₃ solid content concentration: 0.8 mass%) were simultaneously added to precipitate SiO₂ and Al₂O₃. The pH of the dispersion of fine particles after completion of the addition was 12.5. The reaction liquid was cooled to room temperature, and 200 g of a dispersion of SiO₂/Al₂O₃ core fine particles (solid content concentration: 20 mass%) was obtained by an ultrafilter membrane.
(2) To a glass reactor having a capacity of 1,000 ml, 5 g of the dispersion of core fine particles and 17 g of pure water were added and heated at 98°C, and 30 g of a silicic acid solution (SiO₂ concentration: 3.5 mass%) obtained by dealkalization of an aqueous sodium silicate solution with a strongly acidic cation exchange resin (manufactured by Mitsubishi Chemical Corporation, tradename: DIAION) was added to precipitate SiO₂. Then, the reaction liquid was cooled to room temperature, and 500 g of a dispersion of fine particles comprising SiO₂/Al₂O₃ core covered with SiO₂ (solid content concentration: 13 mass%) was obtained by an ultrafilter membrane.
(3) Then, 2,167 g of pure water and a strongly acidic cation exchange resin (manufactured by Mitsubishi Chemical Corporation, tradename: DIAION, total exchange capacity: at least 2.0 (meq/ml)) were added to remove the SiO₂/Al₂O₃ core by dissolution. After stirring for one hour to adjust the pH to 4, the strongly acidic cation exchange resin was removed by filtration to obtain 2,667 g of a dispersion containing hollow SiO₂ particles (average agglomerated particle size: 40 nm, solid content concentration: 3 mass%). The thickness of the shell of the hollow SiO₂ primary particles was 5 nm, and the pore size was 30 nm.
(4) To a glass reactor having a capacity of 200 ml, 65 g of water, 23 g of the obtained dispersion containing hollow SiO₂ particles, 10 g of a SiO₂ oligomer solution (solid content concentration: 3 mass%, ethanol solvent) and 2 g of a surfactant solution (manufactured by Nippon Unicar Company Limited, tradename: L-77, solid content concentration: 1 mass%, ethanol solvent) were added, followed by stirring for 10 minutes to obtain an antireflection coating composition.

Using the coating composition, in the same manner as in Example 1, a coating film was formed on a substrate and evaluated. The results are shown in Table 2.

The coating film particularly had a high maximum reflectance. This is considered to be because the core fine particles were not completely dissolved but remained, as observed by a transmission microscope, whereby no sufficient antireflection properties were obtained.

Further, the coating film had a very large difference between maximum and minimum reflectances and had high chroma saturation (that is, the coating film was colored). It is estimated that as described above, when hollow SiO₂ particles are blended in a coating film, they are monodispersed in the coating film, and accordingly no sufficient refractive index gradient is formed in the film thickness direction.

Using the coating composition, in the same manner as in Example 1, a coating film was formed on a substrate, and the coating film was cured by irradiation with ultraviolet rays for 10 minutes. The coating film was evaluated. The results are shown in Table 2.

**TABLE 1**

| | Average primary particle size (nm) | Average agglomerated particle size (nm) |
|---|---|---|
| Ex. 1 | 40 | 100 |
| Ex. 2 | 40 | 100 |
| Ex. 3 | 40 | 100 |
| Ex. 4 | 40 | 40 |

**TABLE 2**

| | Outer appearance | Maximum reflectance (%) | Minimum reflectance (%) | (Maximum reflectance) - (minimum reflectance) (%) | Haze (%) | Abrasion resistance |
|---|---|---|---|---|---|---|
| Ex. 1 | ○ | 1.0 | 0.3 | 0.7 | 0.1 | ○ |
| Ex. 2 | ○ | 1.5 | 0.7 | 0.8 | 0.1 | ○ |
| Ex. 3 | ○ | 1.2 | 0.3 | 0.9 | 0.1 | ○ |
| Ex. 4 | ○ | 2.0 | 0.3 | 1.7 | 0.1 | ○ |

### INDUSTRIAL APPLICABILITY

The coating composition containing the dispersion containing hollow SiO₂ and the substrate with a coating film obtainable by applying the coating composition of the present invention are applicable to various industrial fields such as automobile glass, building glass, display glass, touch panel glass, optical lenses, solar cell covers, optical filters, antireflection films, polarizing films, heat insulating fillers, low refractive index fillers, low dielectric constant fillers and drug delivery carriers, and they are very highly industrially applicable.

## Claims

1. A dispersion containing hollow SiO₂, having agglomerated particles which are agglomerates of primary fine particles of hollow SiO₂ dispersed in a dispersion medium, wherein the average agglomerated particle size of the agglomerated particles measured by a dynamic light scattering particle size analyzer of the type Microtrac UPA manufactured by Nikkoso Co. Ltd., is within a range of from 60 to 400 nm, and the average agglomerated particle size is at least 1.5 times the average primary particle size observed by a transmission electron microscope of the type H-9000 manufactured by Hitachi Ltd., and wherein the hollow SiO₂ shell is precipitated and formed in the surface of core fine particles by reacting core fine particles or a material of the core fine particles with a precursor of SiO₂, or by decomposing the precursor of SiO₂ in the presence of the core fine particles, wherein the SiO₂ precursor is one member or a mixture of at least two selected from the group consisting of silicic acid, a silicate and an alkoxy-silane, and a hydrolysate or a polymer thereof,
wherein an average agglomerated particle size of the core particles is from 50 to 350 nm, and
wherein said dispersion comprises a matrix component which is a precursor of a metal oxide and/or an organic resin.

2. The dispersion containing hollow SiO₂ according to Claim 1, wherein the average primary particle size of the primary fine particles of hollow SiO₂ is within a range of from 5 to 50 nm.

3. The dispersion containing hollow SiO₂ according to Claim 1 or 2, wherein the agglomerated particles are non-spherical agglomerated particles having from 2 to 10 primary fine particles of hollow SiO₂ agglomerated.

4. A coating composition containing the dispersion containing hollow SiO₂ as defined in any one of Claims 1 to 3.

5. The coating composition according to Claim 4, which has a solution of said matrix component mixed therewith in such an amount that the mass of the solid content of the matrix component is from 0.1 to 10 times the total mass of the solid content of the hollow SiO₂.

6. The coating composition according to Claim 4, wherein the metal oxide is one member or a mixture of at least two selected from the group consisting of Al₂O₃, SiO₂, SnO₂, TiO₂ and ZrO₂.

7. The coating composition according to Claim 4, wherein the organic resin is a ultraviolet-curable organic resin.

8. A process for producing a substrate with an antireflection coating film, wherein the coating composition as defined in any one of Claims 4 to 7 is applied to a substrate.

9. The process according to Claim 8, wherein the substrate with an antireflection coating film has, in the visible wavelength region, a minimum reflectance of at most 2% and a difference between maximum and minimum reflectances of at most 1%, wherein the reflectance is measured by a spectrophotometer.

10. The process according to Claim 8 or 9, wherein the substrate is a transparent substrate.

## Patentansprüche

1. Dispersion, enthaltend hohles SiO₂, mit agglomerierten Teilchen, welche Agglomerate von Primär-Feinteilchen aus hohlem SiO₂, dispergiert in einem Dispersionsmedium, sind, wobei die gemittelte agglomerierte Teilchengröße der agglomerierten Teilchen, gemessen mit einem Gerät zur Teilchengrößenmessung durch dynamische Lichtstreuung vom Typ Microtrac UPA, hergestellt von Nikoso Co. Ltd., innerhalb eines Bereichs von 60 bis 400 nm liegt und die gemittelte agglomerierte Teilchengröße mindestens das 1,5-fache der gemittelten Primärteilchengröße, beobachtet durch ein Transmissionselektronenmikroskop vom Typ H-9000, hergestellt von Hitachi Ltd., beträgt und wobei die hohle SiO₂-Schale an der Oberfläche von Kern-Feinteilchen durch Umsetzen von Kern-Feinteilchen oder eines Materials der Kern-Feinteilchen mit einem Vorläufer von SiO₂ oder durch Zersetzen des Vorläufers von SiO₂ in der Gegenwart der Kern-Feinteilchen gefällt und gebildet wird, wobei der SiO₂-Vorläufer ein Vertreter oder ein Gemisch von mindestens zweien, ausgewählt aus der Gruppe, bestehend aus Kieselsäure, einem Silikat und einem Alkoxysilan sowie einem Hydrolysat oder Polymer daraus, ist,
wobei eine gemittelte agglomerierte Teilchengröße der Kernteilchen 50 bis 350 nm beträgt und
wobei die Dispersion eine Matrixkomponente umfasst, welche ein Vorläufer eines Metalloxids und/oder eines organischen Harzes ist.

2. Dispersion, enthaltend hohles SiO₂, nach Anspruch 1, wobei die gemittelte Primärteilchengröße der Primär-Feinteilchen aus hohlem SiO₂ innerhalb eines Bereichs von 5 bis 50 nm liegt.

3. Dispersion, enthaltend hohles SiO₂, nach Anspruch 1 oder 2, wobei die agglomerierten Teilchen nicht-sphärische agglomerierte Teilchen mit 2 bis 10 agglomerierten Primär-Feinteilchen aus hohlem SiO₂ sind.

4. Beschichtungszusammensetzung, welche eine Dispersion, enthaltend hohles SiO₂, nach einem der Ansprüche 1 bis 3 enthält.

5. Beschichtungszusammensetzung nach Anspruch 4, die mit einer Lösung der Matrixkomponente in einer derartigen Menge gemischt ist, dass die Masse des Feststoffanteils der Matrixkomponente das 0,1- bis 10-fache der Gesamtmasse des Feststoffanteils des hohlen SiO₂ beträgt.

6. Beschichtungszusammensetzung nach Anspruch 4, wobei das Metalloxid ein Vertreter oder ein Gemisch von mindestens zweien, ausgewählt aus der Gruppe, bestehend aus Al₂O₃, SiO₂, SnO₂, TiO₂ und ZrO₂, ist.

7. Beschichtungszusammensetzung nach Anspruch 4, wobei das organische Harz ein durch Ultraviolettstrahlung härtbares organisches Harz ist.

8. Verfahren zur Herstellung eines Substrats mit einer Antireflexionsbeschichtung, wobei die Beschichtungszusammensetzung nach einem der Ansprüche 4 bis 7 auf ein Substrat aufgebracht wird.

9. Verfahren nach Anspruch 8, wobei das Substrat mit einer Antireflexionsbeschichtung im sichtbaren Wellenlängenbereich einen minimalen Reflexionsgrad von höchstens 2% und eine Differenz zwischen maximalem und minimalem Reflexionsgrad von höchstens 1 % aufweist, wobei der Reflexionsgrad mit einem Spektrophotometer gemessen wird.

10. Verfahren nach Anspruch 8 oder 9, wobei das Substrat ein transparentes Substrat ist.

## Revendications

1. Dispersion contenant du SiO₂ creux, présentant des particules agglomérées qui sont des agglomérats de particules fines primaires de SiO₂ creux dispersées dans un milieu de dispersion, étant précisé que la taille de particules agglomérées moyenne des particules agglomérées, mesurée par un analyseur de taille de particules à diffusion de lumière dynamique du type Microtrac UPA fabriqué par Nikkoso Co. Ltd., est située dans une plage de 60 à 400 nm, et que la taille de particules agglomérées moyenne est égale à au moins 1,5 fois la taille de particules primaires moyenne observée par un microscope électronique par transmission du type H-9000 fabriqué par Hitachi Ltd., et étant précisé que la coque de SiO₂ creux est précipitée et formée dans la surface de particules fines de noyau grâce à la réaction de particules fines de noyau ou d'un matériau de celles-ci avec un précurseur de SiO₂, ou à la décomposition du précurseur de SiO₂ en présence des particules fines de noyau, étant précisé que le précurseur de SiO₂ est un élément ou un mélange d'au moins deux éléments choisis dans le groupe constitué par l'acide silicique, un silicate et un alkoxysilane, et un hydrolysat ou un polymère de celui-ci,
étant précisé qu'une taille de particules agglomérées moyenne des particules de noyau est de 50 à 350 nm, et
étant précisé que ladite dispersion comprend un composant de matrice qui est un précurseur d'un oxyde de métal et/ou une résine organique.

2. Dispersion contenant du SiO₂ creux selon la revendication 1, étant précisé que la taille de particules primaires moyenne des particules fines primaires de SiO₂ creux est située dans une plage de 5 à 50 nm.

3. Dispersion contenant du SiO₂ creux selon la revendication 1 ou 2, étant précisé que les particules agglomérées sont des particules agglomérées non sphériques qui ont 2 à 10 particules fines primaires de SiO₂ creux agglomérées.

4. Composition d'enduction contenant la dispersion contenant du SiO₂ creux telle qu'elle est définie dans l'une quelconque des revendications 1 à 3.

5. Composition d'enduit selon la revendication 4, à laquelle une solution dudit composant de matrice est mélangée dans une quantité telle que la masse du contenu solide du composant de matrice est égale à 0,1 à 10 fois la masse totale du contenu solide du SiO₂ creux.

6. Composition d'enduit selon la revendication 4, étant précisé que l'oxyde de métal est un élément ou un mélange de deux éléments choisis dans le groupe constitué par Al₂O₃, SiO₂, SnO₂, TiO₂ et ZrO₂.

7. Composition d'enduit selon la revendication 4, étant précisé que la résine organique est une résine organique apte à être durcie aux ultraviolets.

8. Procédé pour produire un substrat avec un film d'enduction antireflet, étant précisé que la composition d'enduit telle qu'elle est définie dans l'une quelconque des revendications 4 à 7 est appliquée sur un substrat.

9. Procédé selon la revendication 8, étant précisé que le substrat avec un film d'enduction antireflet présente, dans la zone de longueur d'onde visible, un facteur de réflexion minimal de 2 % au maximum et une différence entre les facteurs de réflexion maximal et minimal de 1 % au maximum, étant précisé que le facteur de réflexion est mesuré par un spectrophotomètre.

10. Procédé selon la revendication 8 ou 9, étant précisé que le substrat est un substrat transparent.
